# EUROPÄISCHE PATENTANMELDUNG

(11) **EP 3 242 257 A1**
(43) Veröffentlichungstag der Anmeldung: **08.11.2017**
(21) Anmeldenummer: 17165032.8
(22) Anmeldetag: 05.04.2017
(51) Int. Cl.: G06Q 10/04, A01D 1/00

(54) **VERFAHREN UND ANORDNUNG ZUR OPTIMIERUNG VON ARBEITSPARAMETERN EINER ERNTEMASCHINE**

(30) Priorität: 02.05.2016 DE 102016207509
(71) Anmelder: Deere & Company, Moline, IL 61265 (US)
(72) Erfinder: Bischoff, Lutz, 68163 Mannheim (DE); Blank, Sebastian, 68163 Mannheim (DE); Pfeiffer, Dohn W, 68163 Mannheim (DE)
(74) Vertreter: Holst, Sönke

(57) **Zusammenfassung**

Zur Optimierung von einem Arbeitsparameter einer Erntemaschine (10) bei einem durchzuführenden Erntevorgang wird eine zur Festlegung des Arbeitsparameters verwendbare Zielvorgabe für die Erntemaschine (10) durch einen Computer (200) im Sinne einer wirtschaftlichen Optimierung des Ergebnisses des Erntevorganges unter Berücksichtigung äußerer, den Erntevorgang betreffender Randbedingungen sowie von Betriebskosten der Erntemaschine (10) und von einem erwarteten, abhängig von mindestens einem Qualitätsparameters des Ernteguts bestimmten Verkaufspreis des Ernteguts berechnet.

## Beschreibung

Die Erfindung betrifft ein Verfahren und eine Anordnung zur Optimierung von einem Arbeitsparameter einer Erntemaschine bei einem durchzuführenden Erntevorgang, mit dem Schritt des Berechnens einer zur Festlegung des Arbeitsparameters verwendbaren Zielvorgabe für die Erntemaschine durch einen Computer im Sinne einer wirtschaftlichen Optimierung des Ergebnisses des Erntevorganges unter Berücksichtigung äußerer, den Erntevorgang betreffender Randbedingungen sowie von Betriebskosten der Erntemaschine und von einem erwarteten Verkaufspreis des Ernteguts.

### Stand der Technik

Landwirtschaftliche Erntemaschinen dienen zur Ernte von Pflanzen von einem Feld. In der Erntemaschine finden Verarbeitungsprozesse statt, um das Erntegut zwecks späterer Weiterverarbeitung zu behandeln. So wird das Erntegut in einem Feldhäcksler gehäckselt und in einem Mähdrescher gedroschen, getrennt und gereinigt. Bei diesen Verarbeitungsprozessen sind verschiedene Arbeitsparameter der Erntemaschine einzustellen, bei einem Feldhäcksler beispielsweise die Schnittlänge und ggf. eine Einwirkintensität einer Konditioniereinrichtung und bei einem Mähdrescher die Dreschtrommeldrehzahl, der Dreschspalt, die Drehzahl des Reinigungsgebläses und die Sieböffnung, und bei allen Erntemaschinen die Vortriebsgeschwindigkeit, welche den jeweiligen Durchsatz bestimmt.

Im Stand der Technik wurden verschiedene Vorgehensweisen beschrieben, mit denen ein Bediener die Einstellung einer Erntemaschine an den jeweiligen Einsatzzweck anpassen kann, um möglichst optimale Ergebnisse zu erzielen.

Üblicherweise werden dazu so genannte Zielvorgaben eingegeben, basierend auf denen Einstellwerte errechnet werden.

Die EP 0 586 999 A2 zeigt ein derartiges Fahrerassistenzsystem, bei dem der Bediener Vorschläge für Betriebsparameter eines Mähdreschers und die Wichtigkeit von Zielvorgaben eingeben kann und das System erwartete Arbeitsergebnisse ausgibt. Bei einem anderen System "Mähdruschassistent MDA 120" der Fa. Aclantec GmbH aus dem Jahr 1995 kann der Bediener zur Vorausberechnung von Erntevorgängen auswählen, ob er einen Verlust oder eine Dringlichkeit der Ernte vorgibt. Das System gibt dann die Einstellwerte und die jeweilige Durchsatzleistung oder die Geschwindigkeit für den Erntevorgang aus. Die EP 0 928 554 A1 beschreibt einen Mähdrescher mit einem Fahrerassistenzsystem, das nach Eingabe von Informationen über externe Erntebedingungen eine Auswahl von unterschiedlichen Zielvorgaben ermöglicht, anhand denen schließlich Vorschläge für Betriebsparameter gegeben werden. Die Zielvorgaben sind insbesondere die Flächenleistung (Durchsatz) und die sich ergebenden Verluste, wobei anhand einer zweidimensionalen Kurve, in der die Verluste abhängig von Durchsatz aufgetragen sind, auch eine Gewichtung beider Zielvorgaben vorgenommen werden kann. Die EP 2 401 904 A2 schlägt vor, dass der Bediener einen Verwendungszweck des Ernteguts eingibt. Nach Eingabe weiterer Zielvorgaben berechnet das Fahrerassistenzsystem optimierte Einstellwerte.

Bei diesen bekannten Vorgehensweisen bleibt es Aufgabe des Bedieners, die jeweils angemessene Zielvorgabe auszuwählen, da diese u.a. vom Anwendungszweck des Ernteguts abhängt. Es ist jedoch für unerfahrene Bediener schwierig, die für einen bestimmten Erntevorgang angemessene Zielvorgabe zu finden.

Ein anderer Ansatz zur Optimierung der Erntemaschineneinstellung besteht darin, ökonomische Aspekte bei der Ernte zu berücksichtigen.

So sind Systeme zur Planung von Erntevorgängen bekannt, die anhand von Karten des Feldes in der Lage sind, kostenmäßig optimierte Wege von Erntemaschinen und Transportfahrzeugen zu berechnen (vgl. beispielsweise EP 1 840 690 A2 und D. Bochtis, S. Vougioukas, C Tsatsarelis and Y. Ampatzidis. "Field Operation Planning for Agricultural Vehicles: A Hierarchical Modeling Framework". Agricultural Engineering International: the CIGR Ejournal. Manuscript PM 06 021. Vol. IX. Februar 2007). Dort werden aber keine Einstellungen oder Betriebswerte des Mähdreschers optimiert. Die EP 1 633 105 A1 beschreibt ein ähnliches System zur Planung eines Erntevorgangs, bei dem ein externer Dienstleister optimierte Einstellwerte für den Mähdrescher zur Verfügung stellen soll, wobei aber die Optimierungskriterien offen bleiben.

In der DE 195 14 223 A1 wird beschrieben, dass die Bordrechner der einzelnen Maschinen jeweils eine ökonomische Optimierung von deren Betriebsparametern durchführen und ein Leitrechner diese bei Bedarf anpassen kann; so kann beispielsweise ein Mähdrescher langsamer und somit unter geringeren Verlusten und vermindertem Kraftstoffverbrauch ernten, wenn zunächst keine Transportkapazität zur Verfügung steht, um das Erntegut abzutransportieren.

In der DD 289 686 A5 wird vorgeschlagen, anhand von die Gesamteinbringung der Ernte betreffenden Größen (Qualitätsanforderungen, Erntefläche, Maschinenbestand, eventuelle Gefahren von Vorernteverlusten oder Totalverlusten in Folge von Auswuchs, Arbeitskräftekosten, Maschinenbelastung, Ausfallrisiko und bei Trocknung von Getreide und schnellerer Wiedereinsaat erzielbarer Gewinn) eine Dringlichkeitsstufe der Ernte festzulegen, der wiederum zulässige Verluste zugeordnet werden und den Mähdrescher unter Verwendung einer speziellen Vorgehensweise bei der Verlustmessung derart zu betreiben, dass diese Verluste eingehalten werden.

Die EP 1 321 024 A1 schlägt vor, auf einer Anzeigeeinrichtung des Mähdreschers zwei vom Durchsatz abhängige Kurven anzuzeigen, von denen eine die Erntekosten und die andere die Verlustkosten anzeigt. Im Schnittpunkt beider Kurven findet sich ein ökonomisches Optimum, das der Bediener möglichst einhalten soll.

Die EP 2 728 523 A1 zeigt ein Fahrerassistenzsystem, das anhand mathematischer Modelle so genannte Opportunitätskosten berechnet, um dem Fahrer anzuzeigen, welche Kosten er bei gegenüber aktuellen Betriebswerten geänderten Betriebswerten des Mähdreschers einsparen könnte. Die Opportunitätskosten werden für einzelne Effizienzparameter des Betriebes berechnet (Abscheidekornverluste, Reinigungskornverluste, Kornsauberkeit, Körnerbruch, unausgedroschene Bestandteile im Korntank, Kraftstoffverbrauch) und zu Gesamtopportunitätskosten aufsummiert. Hierbei werden auch Wettervorhersagen, die Größe der noch abzuerntenden Fläche und Betriebsstoff- und Erntegutpreise berücksichtigt.

### Aufgabe der Erfindung

Die Vorgehensweisen nach DE 195 14 223 A1, DD 289 686 A5 und EP 1 321 024 A1 lassen sich dahingehend zusammenfassen, dass anhand äußerer Randbedingungen eine Zielvorgabe für den Mähdrescher berechnet wird, unter deren Einhaltung ein unter wirtschaftlichen Gesichtspunkten optimierter Betrieb erfolgen kann. Bei dieser Zielvorgabe handelt es sich ausschließlich um die Verluste, anhand derer ein anzustrebender Durchsatz und zugehörige Betriebswerte von verstellbaren Elementen des Mähdreschers berechnet werden. In der EP 2 728 523 A1 wird hingegen von vorhandenen Betriebswerten des Mähdreschers ausgegangen und angezeigt, in welcher Weise die Einstellung des Mähdreschers teilweise hinsichtlich der mit gewissen Effizienzparametern verbundenen Kosten oder insgesamt optimiert werden kann. Der mit dem Erntegut erzielbare Preis wird zwar aktuell ermittelt und bei der Optimierung der Betriebswerte berücksichtigt, aber ohne die Qualität des Ernteguts in Betracht zu ziehen.

Im Stand der Technik wird demnach nicht berücksichtigt, dass die Qualität des Ernteguts gewisse Auswirkungen auf den erzielbaren Preis haben kann. So sinken u.U. die erzielbaren Preise für Getreide, wenn der Bruchkornanteil größer als ein bestimmter Prozentsatz ist (J. Rademacher, Sanftes Dreschen schont das Korn, top agrar 7/2004, Seiten 62-64). Wenn somit zur Optimierung des wirtschaftlichen Profits der Durchsatz des Mähdreschers sehr hoch gewählt wird und das Erntegut sehr scharf gedroschen wird, um eine Überlastung des Überkehrförderers zu verhindern, kann das wirtschaftliche Ergebnis des Erntevorgangs durch zu hohe Bruchkornanteile nachteilig beeinflusst werden. Analog kann eine zur Vergrößerung des Durchsatzes (und somit des wirtschaftlichen Ertrags) eingestellte, große Sieböffnung zu Verunreinigungen im Korntank führen, die ebenfalls Abschläge im erzielbaren Preis für das Erntegut zur Folge haben können.

Weiterhin hängt der erzielbare Preis des Ernteguts auch von dessen beabsichtigter Verwendung ab, die wiederum von der Qualität des Ernteguts abhängt. So wird zur Verfütterung an Tiere oder zur Energiegewinnung geerntetes, weniger proteinhaltiges Getreide regelmäßig geringere Verkaufspreise einbringen als proteinhaltigeres Getreide, das zur Nahrungsmittelherstellung dienen soll. Im erstgenannten Fall spielt es somit eine geringere Rolle, ob das Erntegut beschädigt oder verunreinigt ist als im zweiten Fall, sodass dort auch für die Qualität des Ernteguts ungünstigere Betriebsparameter in Kauf genommen werden können als im zweiten Fall. Derartige Unterscheidungen werden im Stand der Technik jedoch nicht vorgenommen.

Die Aufgabe der vorliegenden Erfindung wird darin gesehen, ein Verfahren und eine Anordnung zur Optimierung von Arbeitsparametern einer Erntemaschine bereitzustellen, das die erwähnten Nachteile nicht oder in einem geringeren Maße aufweist.

### Lösung

Diese Aufgabe wird erfindungsgemäß durch die Lehre der Patentansprüche 1 und 13 gelöst, wobei in den weiteren Patentansprüchen Merkmale aufgeführt sind, die die Lösung in vorteilhafter Weise weiterentwickeln.

Ein Verfahren und eine Anordnung zur Optimierung von einem Arbeitsparameter einer Erntemaschine bei einem durchzuführenden Erntevorgang umfasst den Schritt des Berechnens einer zur Festlegung des Arbeitsparameters verwendbaren Zielvorgabe für die Erntemaschine durch einen Computer im Sinne einer wirtschaftlichen Optimierung des Ergebnisses des Erntevorganges unter Berücksichtigung äußerer, den Erntevorgang betreffender Randbedingungen sowie von Betriebskosten der Erntemaschine und von einem erwarteten Verkaufspreis des Ernteguts. Bei der erwähnten Berechnung der Zielvorgabe wird die Abhängigkeit des erwarteten Verkaufspreises des Ernteguts von mindestens einem Qualitätsparameter des Ernteguts berücksichtigt.

Mit anderen Worten erfolgt durch einen Computer eine Berechnung einer Zielvorgabe für eine Erntemaschine. Die Zielvorgabe ist geeignet, von der Erntemaschine bei einem durchzuführenden Erntevorgang verwendet (d.h. berücksichtigt) zu werden, dient demnach zur Bestimmung von einem oder mehreren Arbeitsparametern der Erntemaschine beim durchzuführenden Erntevorgang. Der oder die Arbeitsparameter werden beim Erntevorgang derart eingestellt, dass die Zielvorgabe möglichst gut erreicht wird. Diese Zielvorgabe wird derart gewählt, dass eine wirtschaftliche Optimierung des Erntevorgangs erfolgt, d.h. die Differenz aus dem Ertrag des Erntevorgangs und der zugehörigen Kosten wird möglichst groß sein. Bei dieser Optimierung werden äußere, den Erntevorgang betreffende Randbedingungen, die Betriebskosten der Erntemaschine und der erwartete Verkaufspreis des Ernteguts berücksichtigt. Beim Schritt des Berechnens der Zielvorgabe berücksichtigt, dass der Verkaufspreis des Ernteguts von einem Qualitätsparameter des Ernteguts abhängt. D.h. bei aufgrund hoher Qualität teuer verkaufbarem Erntegut wird von einem höheren Preis ausgegangen als bei niedrigerer Qualität nur billiger verkaufbarem Erntegut.

Auf diese Weise vermeidet man die eingangs erwähnten Nachteile des Standes der Technik. Nach der erfindungsgemäßen Vorgehensweise kann der Einfluss der Erntemaschine auf den Qualitätsparameter des Ernteguts (und somit dessen Preis) berücksichtigt werden, wie alternativ oder zusätzlich der Einfluss anderer, wachstumsbedingter Vorgänge (z.B. Düngung, Wetter, Standort, Bodeneigenschaften, Saatguteigenschaften) des Ernteguts auf den (insbesondere die Inhaltsstoffe oder andere Merkmale, wie Geschmack, Festigkeit, Haltbarkeit etc. betreffende) Qualitätsparameter des Ernteguts (und somit dessen Preis) berücksichtigt werden kann. Bei dem Beispiel des Mähdreschers kann somit berücksichtigt werden, welchen Preisnachlass aufgrund der Einwirkung der Erntemaschine beschädigtes oder verunreinigtes Erntegut zur Folge hat und dieser Preisnachlass wird bei der Berechnung der Zielvorgabe berücksichtigt. Auch kann berücksichtigt werden, welchen Preis das Erntegut auf Grund eines wachstumsbedingten Qualitätsparameters voraussichtlich erzielen wird.

Der Qualitätsparameter kann vor dem Erntevorgang anhand von Stichproben des Ernteguts oder während des Erntevorgangs durch eine Messung an Bord der Erntemaschine bestimmt werden.

Der Qualitätsparameter des Ernteguts kann anhand von einem oder mehreren Inhaltsstoffen (z.B. Protein- und/oder Vitamingehalt) und/oder einem Beschädigungsgrad und/oder der Reinheit des Ernteguts evaluiert werden.

Es kann der qualitätsparameterabhängige Verkaufspreis von Fruchtständen und/oder von Halmen des Ernteguts evaluiert und bei der Bestimmung der Zielvorgabe im Sinne einer Optimierung berücksichtigt werden.

Beim Berechnen der Zielvorgabe kann berücksichtigt werden, welchen Einfluss die Zielvorgabe auf den Qualitätsparameter des Ernteguts und somit auf den erwarteten Verkaufspreis des Ernteguts hat. So ist beispielsweise bekannt, welche Auswirkung die Zielvorgabe "Durchsatz" oder "Verlust" auf den Qualitätsparameter "Kornbeschädigung" oder "Verunreinigung" hat. Dieser Zusammenhang wird bei der Bestimmung der Zielvorgabe im Sinne einer wirtschaftlichen Optimierung des Erntevorgangs berücksichtigt. Die Zielvorgabe muss nicht unbedingt (nur) den Verlust oder Durchsatz betreffen, sondern kann (alternativ oder zusätzlich) die Qualität des Ernteguts betreffen, d.h. der Betriebswert oder Arbeitsparameter eines Mähdreschers wird derart eingestellt, dass wenigstens einer der erwähnten Qualitätsparameter eingehalten wird. Hierbei kann zusätzlich eine Zielvorgabe für Erntegutverluste oder den Durchsatz berechnet und beim Erntevorgang zweckmäßigerweise (neben der Zielvorgabe hinsichtlich der Erntegutqualität) eingehalten werden.

Der Computer kann zusätzlich eine Wegplanung für die Erntemaschine und ggf. ein oder mehrere Transportfahrzeuge für das Erntegut im Sinne einer wirtschaftlichen Optimierung durchführen. Auch kann der Computer Zielvorgaben für mehrere Erntemaschinen berechnen. Bei einer anderen Ausführungsform berechnet jede Erntemaschine ihre Zielvorgabe für sich.

Die äußeren Randbedingungen können eine oder mehrere der folgenden sein: Größe eines beim Erntevorgang noch abzuerntenden Feldes, Lage eines beim Erntevorgang abzuerntenden Feldes und der Abgabestelle des Ernteguts, eine Wettervorhersage, Feuchtigkeit und/oder einen Qualitätsparameter des Ernteguts, Kosten einer nachträglichen Trocknung des Ernteguts, verfügbare Transportmöglichkeiten für das Erntegut, Betriebskosten der Transportkette, Betriebsdaten der Erntemaschine und ggf. verfügbarer, weiterer Erntemaschinen, und/oder geplante nachfolgende Nutzung des Felds.

Der Schritt des Berechnens kann durch einen Bordcomputer der Erntemaschine oder durch einen von der Erntemaschine beabstandeten Computer durchgeführt werden, bei dem es sich um einen stationären Rechner (z.B. einen so genannten Hof-PC) oder einen mobilen Rechner, z.B. ein Smartphone, Laptop oder Tablet-Computer handeln kann.

Vor der Übernahme der Zielvorgabe durch einen Bordcomputer der Erntemaschine kann eine Bestätigung durch einen Bediener eingebbar sein. Die Zielvorgabe wird somit nur dann von der Erntemaschine übernommen, wenn der Bediener (oder eine andere, zur Bestätigung bevollmächtigte Person, z.B. ein Betriebsleiter, der durch Fernkommunikationsmittel mit der Erntemaschine verbunden ist) sich mit ihr einverstanden erklärt. Dadurch vermeidet man in ungünstigen Fällen eine Verwendung einer nicht realistischen Zielvorgabe, die zu nicht optimalen Einstellungen der Arbeitsparameter der Erntemaschine führen würde.

Der Schritt des Berechnens kann wiederholt werden, wenn sich während des Erntevorgangs eine der Berechnungsgrundlagen (z.B. die Wettervorhersage oder die Anzahl verfügbarer Maschinen einer Transportkette) ändert.

Durch einen Bediener (oder die oben erwähnte, bevollmächtigte Person) kann vorgebbar sein, ob und ggf. ab welcher betragsmäßigen Änderung einer Zielvorgabe eine Bestätigung durch den Bediener vorgesehen sein soll. Kleinere Änderungen werden demnach unmittelbar übernommen, aber größere Änderungen erfordern weiterhin eine menschliche Bestätigung.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht einer landwirtschaftlichen Erntemaschine in Form eines Mähdreschers,
- Fig. 2: ein Flussdiagramm für eine Vorgehensweise zur Berechnung und Optimierung von Betriebsparametern der Erntemaschine der Figur 1, und
- Fig. 3: eine schematische Ansicht der für die Vorgehensweise der Figur 2 verwendeten Mittel.

### Erntemaschine

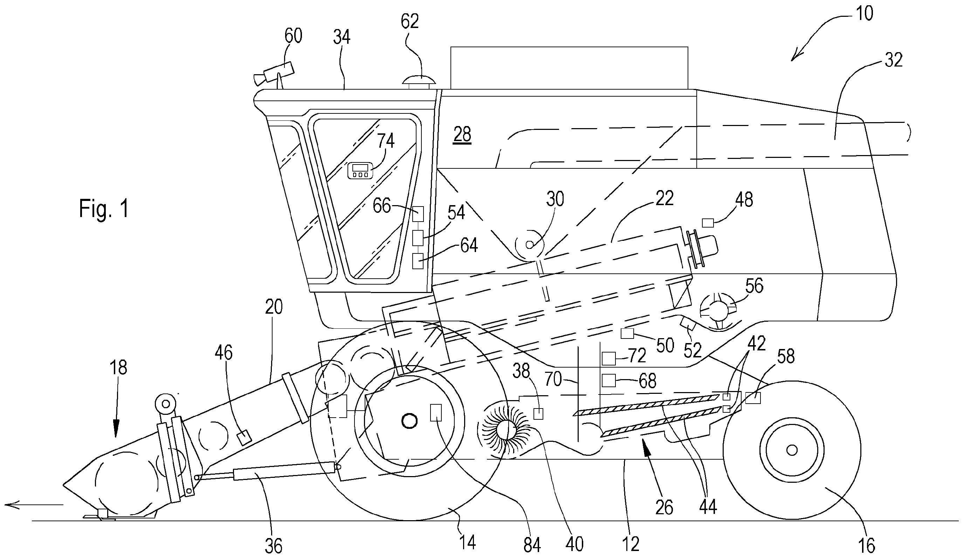

Die Figur 1 zeigt eine selbstfahrende Erntemaschine in Form eines Mähdreschers 10 mit einem Fahrgestell 12, das sich über angetriebene vordere Räder 14 und lenkbare rückwärtige Räder 16 auf dem Boden abstützt und von diesen fortbewegt wird. Die Räder 14, 16 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb, die in der Figur 1 nach links verläuft.

An den vorderen Endbereich des Mähdreschers 10 ist ein Erntevorsatz 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägfördererzusammenbau 20 einem Axialdreschwerk 22 zuzuführen. Das im Axialdreschwerk 22 durch Dreschkörbe und Roste hindurchtretende, Körner und Verunreinigungen enthaltende Gemisch gelangt in eine Reinigungseinrichtung 26. Durch die Reinigungseinrichtung 26 gereinigtes Getreide wird mittels einer Körnerschnecke einem Körnerelevator zugeführt, der es in einen Korntank 28 befördert. Das gereinigte Getreide aus dem Korntank 28 kann durch ein Entladesystem mit einer Querschnecke 30 und einem Entladeförderer 32 entladen werden. Die genannten Systeme werden mittels eines Verbrennungsmotors angetrieben und von einem Bediener aus einer Fahrerkabine 34 heraus kontrolliert und gesteuert.

Ein Bordcomputer 54 kontrolliert (über nicht gezeigte Ventile) die Position eines Aktors 36 zur Veränderung der Höhe des Erntevorsatzes 18 über dem Boden, die Position eines Aktors 38 zur Verstellung der Drehzahl eines Gebläses 40 der Reinigungseinrichtung 26, von zwei Aktoren 42 zur Verstellung der Öffnungsweite von Sieben 44 der Reinigungseinrichtung 26 und eines Aktors 84 zur Vorgabe der Vortriebsgeschwindigkeit des Mähdreschers 10. Ein weiterer vom Bordcomputer 54 kontrollierter Aktor (nicht gezeigt) könnte die Höhe einer Haspel des Erntevorsatzes 18 vorgeben. Weiterhin kontrolliert ein Aktor 48 die Drehzahl des Axialdreschwerks 22 und ein Aktor 50 verstellt die Position des Dreschkorbs, um die Größe des Dreschspalts einzustellen. Die erwähnten Aktoren 36, 38, 42, 84, 48, 50 werden durch den Bordcomputer 54 verstellt.

Ein Durchsatzsensor 46 erfasst den Durchsatz im Schrägfördererzusammenbau 20, beispielsweise anhand eines Antriebsmoments eines Kettenförderers des Schrägförderers. Ein erster Kornverlustsensor 52 erfasst die Menge der Verlustkörner im vom Axialdreschwerk 22 abgegebenen Erntegutrestestrom, der durch eine Auswurf trommel 56 direkt oder über einen Strohhäcksler (nicht gezeigt) an der Rückseite des Mähdreschers 10 auf das Feld abgegeben wird. Ein zweiter Kornverlustsensor 58 erfasst die Menge der Verlustkörner im von Obersieb der Reinigungseinrichtung 26 abgegebenen Erntegutrestestrom, der durch den erwähnten Strohhäcksler oder einen separaten Kaffverteiler auf das Feld abgegeben wird. Eine Kamera 68 mit zugehöriger Bildverarbeitungseinrichtung ist einem Körnerelevator 70 zugeordnet, der das gereinigte Korn von der Reinigungseinrichtung 26 in den Korntank 28 verbringt. Ein Sensor 72 in Form eines Nahinfrarotspektrometers blickt ebenfalls in den Körnerelevator 70, um den Anteil an Inhaltsstoffen des in den Korntank 28 geförderten Korns, z.B. an Proteinen, zu messen. Die Sensoren 46, 52, 58, 68 und 72 sind signalübertragend mit dem Bordcomputer 54 verbunden.

Der Bordcomputer 54 ist weiterhin mit einer Speichereinrichtung 64, einer Kommunikationseinrichtung 66, einer Positionsbestimmungseinrichtung 62 in Form einer Antenne zum Empfang von Signalen eines satellitenbasierten Positionsbestimmungssystems und mit einer Bedienerschnittstelle 74 mit Eingabemitteln (Tasten) und einer Anzeige verbunden.

### Hardware zur Optimierung der Einstellung der Erntemaschine

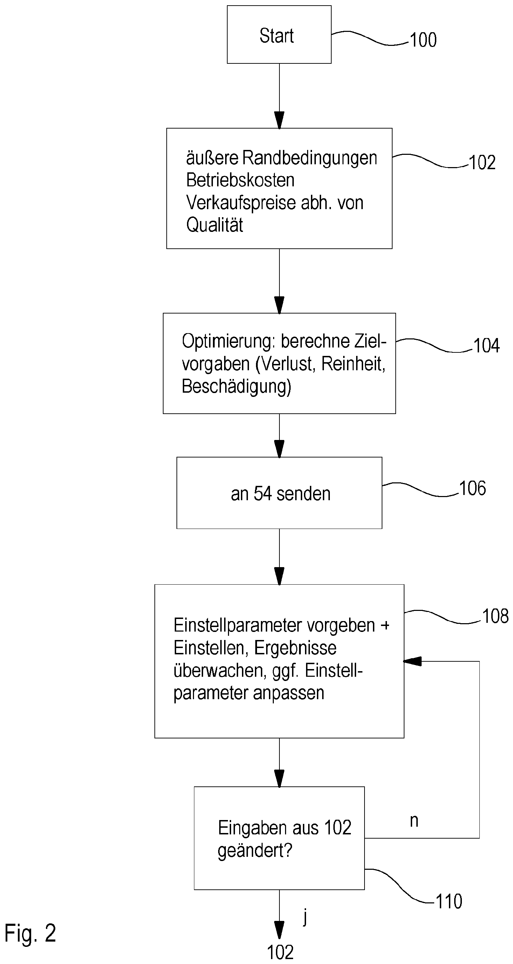

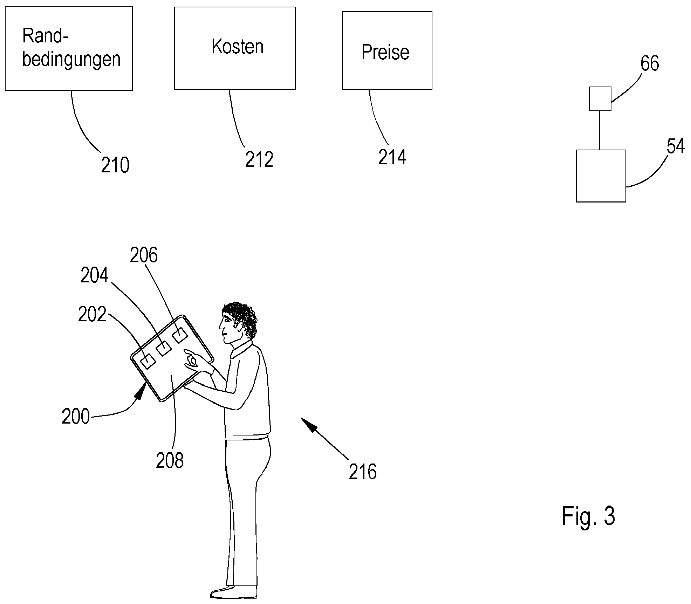

Die Figur 2 zeigt eine Vorgehensweise, mit der eine optimierte Einstellung der Betriebswerte des Mähdreschers 10 der Figur 1 erzielt werden kann. Hierbei wird die in der Figur 3 gezeigte Hardware verwendet, die einen Computer 200 umfasst, der einen Prozessor 202, einen mit dem Prozessor 202 gekoppelten Speicher 204, eine mit dem Prozessor 202 gekoppelte Kommunikationsschnittstelle 206 und eine mit dem Prozessor 202 gekoppelte, berührungsempfindliche Anzeigeeinrichtung 208 umfasst. Der Computer 200 ist als handgehaltener Tablet-Computer gezeigt, könnte aber auch als Smartphone, Laptop oder stationärer Computer mit separatem Bildschirm und Tastatur ausgeführt sein. Der Computer 200 ist über die Kommunikationsschnittstelle 206 drahtlos unter Verwendung beliebiger, ggf. unterschiedlicher, Protokolle online mit einer ersten Datenbank 210, einer zweiten Datenbank 212, einer dritten Datenbank 214 und über die Kommunikationsschnittstelle 66 mit dem Bordcomputer 54 verbunden.

### Optimierung

Nach dem Start im Schritt 100 werden im Schritt 102 aus der ersten Datenbank 210 Daten hinsichtlich äußerer Randbedingungen eines durchzuführenden Erntevorgangs entnommen. Diese Daten betreffen insbesondere die Größe des beim Erntevorgang abzuerntenden Feldes (bei einem bereits teilweise abgeernteten Feld die noch abzuerntende Fläche), die Lage des beim Erntevorgang abzuerntenden Feldes und der Abgabestelle des Ernteguts (Kornspeicher, Trocknungsanlage o.ä.), eine Wettervorhersage, eine gemessene oder vorausberechnete Feuchtigkeit und/oder einen Qualitätsparameter des Ernteguts, verfügbare Transportmöglichkeiten für das Erntegut, Betriebsdaten der Erntemaschine und ggf. verfügbarer, weiterer Erntemaschinen, und/oder die geplante nachfolgende Nutzung des Felds. Es werden demnach alle relevanten Randbedingungen für den durchzuführenden Erntevorgang erfasst. Die erste Datenbank 210 kann sich in der so genannten Cloud befinden, d.h. auf einem externen Server, der von einem Dienstleister oder einem Hersteller des Mähdreschers 10 betrieben wird und auf dem zuvor die erwähnten Daten abgespeichert wurden, was durch den Betriebsleiter eines landwirtschaftlichen Betriebs, dem das abzuerntende Feld gehört, oder eine beauftragte Person (Angestellter, Lohnunternehmer, Dienstleister etc.) durchgeführt werden kann.

Zudem werden im Schritt 102 die zu erwartenden Betriebskosten erfasst. Hierbei handelt es sich einerseits um Kraftstoffkosten, die von der zweiten Datenbank 212 erfasst werden können. Eine derartige Datenbank 212 kann beispielsweise über das Internet zur Verfügung gestellt werden, oder über eine direkte Verbindung mit einem Server einer benachbarten Tankstelle. Zudem werden die mit dem einzubringenden Erntegut zu erzielenden Preise aus der dritten Datenbank 214 erfasst. Eine derartige Datenbank 214 kann beispielsweise über das Internet zur Verfügung gestellt werden, in dem auf Daten einer Rohstoffbörse zugegriffen wird, oder über eine direkte Verbindung mit einem Server einer benachbarten landwirtschaftlichen Genossenschaft o.ä. Die Daten von der dritten Datenbank enthalten nicht nur einen einzigen Preis für das Erntegut, sondern unterschiedliche Preise, die von Qualitätsparametern des Ernteguts abhängen, d.h. insbesondere davon, wie rein das Erntegut ist und/oder in welchem Maße es beschädigt ist und/oder wie groß der Gehalt des Ernteguts an Protein oder anderen Inhaltsstoffen ist oder andere wachstumsbedingte Eigenschaften, wie Geschmack, Festigkeit o. dgl..

Weitere Betriebskosten hinsichtlich der anfallenden Stundenlöhne des Bedieners der Erntemaschine 10 und einer zugehörigen Transportkette (Traktoren oder Lastwagen mit Anhängern oder Aufliegern, die das Erntegut vom Mähdrescher 10 zur Abgabestelle transportieren) können aus einer der Datenbanken 210 bis 214 abgerufen oder im Speicher 204 abgelegt sein.

Im nachfolgenden Schritt 104 erfolgt nun eine Optimierung des Erntevorgangs. Einerseits kann eine Wegplanung für die Erntemaschine und die Transportkette auf dem Feld und auf der Straße erfolgen (vgl. EP 1 840 690 A2 oder D. Bochtis et al., a.a.O.), andererseits wird anhand bekannter, mathematischer Modelle des Mähdreschers 10 berechnet, bei welchen Betriebsparametern des Mähdreschers 10 die größte Differenz aus dem wirtschaftlichen Ertrag des Erntegutes und den für den Erntevorgang anfallenden Kosten zu erwarten ist. Dabei werden auch die von den Qualitätsparametern des Ernteguts abhängigen, erzielbaren Preise berücksichtigt. Die jeweiligen Qualitätsparameter des zu erntenden Ernteguts können, insofern sie Inhaltsstoffe oder andere, wachstumsbedingte Eigenschaften des Ernteguts betreffen, bereits bekannt sein und in die Datenbank 210 eingetragen sein, z.B. in Form einer Karte. Hierfür wären vor Beginn der Ernte zumindest stichprobenartige Messungen oder Laboranalysen durchzuführen, um die Inhaltsstoffe zu erfassen, oder diese werden anhand von während des Wachstums der Pflanzen erfassten Angaben (Dünger, Wetter, etc.) abgeschätzt. Alternativ oder zusätzlich werden die erwähnten Qualitätsparameter des Ernteguts während der Ernte durch den Sensor 72 erfasst (und/oder durch den Bediener der Erntemaschine 10 ermittelt und in die Bedienerschnittstelle 74 eingegeben) und über die Steuerung 54 dem Rechner 200 übermittelt, der diese dann im weiteren Verlauf der Ernte berücksichtigt.

Der Schritt 104 berücksichtigt die Datenbank 214, in der die für das Erntegut erwarteten Preise in Abhängigkeit von einem oder mehreren Qualitätsparametern des Ernteguts eingetragen sind. Dadurch kann beispielsweise mittels einer geschickten Planung des Weges der Erntemaschine erreicht werden, dass das qualitativ beste bzw. teuerste Erntegut zeitlich zuerst eingebracht wird und die Zielvorgabe an die Erntemaschine 10 wird eher in Richtung einer schonenden Behandlung des Ernteguts zur Erhaltung einer optimalen Qualität gehen. Analog wird weniger gutes, billigeres Erntegut später eingebracht und die Zielvorgabe an die Erntemaschine 10 wird eher in Richtung einer schnellen, preisgünstigen Einbringung des Ernteguts unter Hinnahme von gewissen Minderungen an der Qualität gehen. Auch kann im Schritt 104 festgelegt werden, welche Obergrenze für Kornbeschädigung und -verunreinigung zulässig sein soll.

Außerdem kann im Schritt 104 berücksichtigt werden, welcher Verkaufspreis für die Halme (d.h. das Stroh) des Ernteguts erzielt werden kann, abhängig vom Beschädigungsgrad. Letzterer hängt von den Einstellungen (Drehzahl und Dreschspalt) des Axialdreschwerks 22 und von der Brüchigkeit des Strohs ab. Dem Computer 200 ist somit aus der Datenbank 210 bekannt, welche Eigenschaften (Länge, Volumen, Brüchigkeit) das Stroh auf dem abzuerntenden Feld hat. Hierzu können entsprechende Einträge in der Datenbank 210 vorgesehen sein, die analog zu den Einträgen der Inhaltsstoffe vorgenommen werden können, und/oder die erwähnten Eigenschaften (Länge, Volumen, Brüchigkeit) werden während der Ernte durch geeignete Sensoren (z.B. eine Kamera an der Rückseite des Mähdreschers) oder den Bediener (analog zu den erwähnten Inhaltsstoffen oder wachstumsbedingten Eigenschaften des Ernteguts) ermittelt und über die Steuerung 54 dem Rechner 200 übermittelt, der diese dann im weiteren Verlauf der Ernte berücksichtigt. Dem Computer 200 liegen zudem Informationen dazu vor, welche Auswirkungen bestimmte Einstellung des Axialdreschwerks 22 auf das Stroh haben, und aus der Datenbank 214 ist dem Computer 200 bekannt, welcher Preis für welche Qualität des Strohs erzielbar ist. Die Einstellungen des Axialdreschwerks 22 werden im Sinne einer Optimierung des wirtschaftlichen Gesamtertrages (d.h. nicht nur des Strohs, sondern auch des Korns) berechnet.

Als Ergebnis des Schritts 104 steht somit neben einer Zielvorgabe für die anzustrebenden Verluste (die wiederum mit dem Durchsatz in eindeutiger Relation stehen) eine weitere Zielvorgabe für die zu erzielende Reinheit des Korns im Korntank 28, eine weitere Zielvorgabe für den zu erzielenden Anteil beschädigten Korns im Korntank 28 und eine weitere Zielvorgabe für den zu erzielenden Beschädigungsgrad des Strohs zur Verfügung. Es wäre jedoch auch denkbar, dass als Ergebnis des Schritts 104 detaillierte Betriebswerte oder Arbeitsparameter für verschiedene Erntegutbearbeitungseinrichtungen der Erntemaschine 10 ausgegeben werden. In diesem Fall sind die Betriebswerte oder Arbeitsparameter mit den Zielvorgaben gleichzusetzen und umgekehrt.

Die Ausgabewerte des Schritts 104 können pauschal für den ganzen Erntevorgang gelten oder nur jeweils für bestimmte geographische Flächen. Dies kann beispielsweise der Fall sein, wenn Inhaltsstoffe des Ernteguts standortspezifisch stärker variieren. Im diesem Fall werden dem Bordcomputer 54 neben den Ausgabewerten die zugehörigen geographischen Flächen mitgeteilt, der die Ausgabewerte dann positionsspezifisch abruft.

Wenn ein landwirtschaftlicher Betrieb über mehrere Erntemaschinen 10 verfügt, kann der Computer 10 die Schritte 102 bis 106 für alle diese Erntemaschinen 10 durchführen und miteinander koordinieren, insbesondere hinsichtlich der Wegplanung. Alternativ könnten die Bordcomputer 54 der Erntemaschinen 10 ihre Wegplanungen (vgl. EP 1 840 690 A2), Zielvorgaben und/oder Betriebswerte selbstständig ausrechnen und sich die geplanten Ergebnisse untereinander mitteilen und abstimmen.

Im Schritt 106 werden die Ausgabewerte des Schritts 104 (z.B. Zielvorgaben) an den Bordcomputer 54 des Mähdreschers 10 übersandt. Der Bediener des Mähdreschers 10 wird vorzugsweise mittels der Bedienerschnittstelle 74 über die vorgeschlagenen Zielvorgaben und ihre wirtschaftlichen Auswirkungen im Vergleich mit geltenden Zielvorgaben oder Arbeitsparametern informiert und kann durch entsprechende Eingaben in die Bedienerschnittstelle 74 eine Übernahme der vorgeschlagenen Zielvorgaben veranlassen, diese modifizieren oder ablehnen.

Im Schritt 108 berechnet der Bordcomputer 54 anhand der im Schritt 106 erhaltenen Zielvorgaben Einstellparameter für die betreffenden Aktoren 38, 42, 48, 50 und 84 des Mähdreschers, die beispielsweise die Vortriebsgeschwindigkeit, Drehzahl und Größe des Dreschspalts des Axialdreschwerks 22 und die Gebläsedrehzahl und die Sieböffnungen der Reinigungseinrichtung 26 kontrollieren. Hierzu dienen wieder bekannte Modelle oder vorprogrammierte Zusammenhänge zwischen den Zielvorgaben und den Einstellparametern. Beim Betrieb des Mähdreschers 10 werden die Einstellparameter basierend auf den erwähnten Sensoren 46, 58 und 68 (und/oder Eingaben des die Erntegutbearbeitung in der Erntemaschine 10 beobachtenden und bewertenden Bedieners in die Bedienerschnittstelle 74) nachgeregelt, um die Zielvorgaben möglichst genau einzuhalten. Die Signale der Kamera 68 werden somit hinsichtlich der im Körnerstrom des Elevators enthaltenen Verunreinigungen und Bruchkorns analysiert und dienen zur Kontrolle des Einhaltens der Zielvorgaben hinsichtlich der Qualität des Ernteguts (Reinheit und Beschädigungen) und ggf. gegensteuernder Maßnahmen, falls die Zielvorgaben nicht eingehalten werden. Es kann sein, dass gewisse Zielvorgaben besser eingehalten werden als vorgesehen (d.h. die Qualität ist besser als geplant), aber es wird möglichst vermieden, dass die Qualität schlechter als geplant ist.

Es folgt der Schritt 110, in dem geprüft wird, ob sich eine oder mehrere der Eingaben des Schritts 102 zwischenzeitlich geändert haben. Dieser Schritt wird bei der Ausführungsform nach Figur 3 nicht auf dem Bordcomputer 54, sondern auf dem Computer 200 durchgeführt. Sollte sich keine Eingabe geändert haben, wird weiterhin der Schritt 108 durchgeführt. Anderenfalls ist eine Neuplanung vorgesehen, z.B. bei geänderter Wetterprognose, die eine schnellere Ernte sinnvoll erscheinen lässt, und der Schritt 102 wird von neuem durchgeführt. Im Schritt 110 kann auch überprüft werden, ob der Erntevorgang in der Weise und Geschwindigkeit fortschreitet, wie es im Schritt 104 geplant war. Sollte die Ernte schneller oder langsamer ablaufen als zunächst geplant, erfolgt ebenfalls eine Neuplanung. Die Vorgehensweise endet, wenn der Erntevorgang beendet ist.

Es sei noch angemerkt, dass verschiedene Modifikationen der beschriebenen Vorgehensweise möglich wären. So könnte die Berechnung der Schritte 102 und 104 direkt auf dem Bordcomputer 54 erfolgen und der Computer 200 entfallen. Weiterhin kann vorgesehen sein, dass der Schritt 104 noch eine Bestätigung der berechneten Zielvorgaben durch einen Bediener 216 des Rechners 200 umfasst, bevor der Schritt 106 erfolgt. Bei diesem Bediener 216 kann es sich um eine andere Person handeln als um den Bediener des Mähdreschers 10. Beispielsweise kann der Bediener 216 über eine höhere Qualifikation als der Bediener des Mähdreschers 10 verfügen, sodass ihm eine höhere Berechtigungsstufe zur Bedienung des Computers 200 verliehen wurde. Schließlich kann (durch den Bediener 216 oder eine dazu berechtigte Person) in den Computer 200 eingebbar sein, ob und ggf. ab welcher betragsmäßigen Änderung einer Zielvorgabe gemäß Schritt 204 eine Bestätigung durch den Bediener vorgesehen sein soll. Kleinere Änderungen können demnach direkt übernommen werden, während für größere Änderungen noch eine menschliche Überprüfung erforderlich ist.

Die vorliegende Erfindung kann nicht nur an Mähdreschern verwendet werden, sondern auch an Feldhäckslern, die Erntegut häckseln und darin enthaltene Körner mit einem Körnerprozessor aufschließen. Dort kann die Zielvorgabe den Durchsatz und als Qualitätsparameter den Anteil aufgeschlossener Körner betreffen.

## Patentansprüche

1. Verfahren zur Optimierung von einem Arbeitsparameter einer Erntemaschine (10) bei einem durchzuführenden Erntevorgang, mit dem Schritt des Berechnens einer zur Festlegung des Arbeitsparameters verwendbaren Zielvorgabe für die Erntemaschine (10) durch einen Computer (200) im Sinne einer wirtschaftlichen Optimierung des Ergebnisses des Erntevorganges unter Berücksichtigung äußerer, den Erntevorgang betreffender Randbedingungen sowie von Betriebskosten der Erntemaschine (10) und von einem erwarteten Verkaufspreis des Ernteguts, **dadurch gekennzeichnet, dass** bei der Berechnung der Zielvorgabe die Abhängigkeit des erwarteten Verkaufspreises des Ernteguts von mindestens einem Qualitätsparameter des Ernteguts berücksichtigt wird.

2. Verfahren nach Anspruch 1, wobei der Qualitätsparameter vor dem Erntevorgang anhand von Stichproben des Ernteguts oder während des Erntevorgangs durch eine Messung an Bord der Erntemaschine bestimmt wird.

3. Verfahren nach Anspruch 1 oder 2, wobei der Qualitätsparameter des Ernteguts anhand von einem oder mehreren Inhaltsstoffen und/oder einem Beschädigungsgrad und/oder der Reinheit des Ernteguts evaluiert wird.

4. Verfahren nach einem der vorhergehenden Ansprüche, wobei der qualitätsparameterabhängige Verkaufspreis von Fruchtständen und/oder von Halmen des Ernteguts evaluiert und bei der Optimierung berücksichtigt wird.

5. Verfahren nach einem der Ansprüche 1 bis 4, wobei beim Berechnen der Zielvorgabe berücksichtigt wird, welchen Einfluss die Zielvorgabe auf den Qualitätsparameter des Ernteguts und somit auf den erwarteten Verkaufspreis des Ernteguts hat.

6. Verfahren nach einem der Ansprüche 1 bis 5, umfassend den Schritt des Durchführens des Erntevorgangs unter Einhaltung der berechneten Zielvorgabe.

7. Verfahren nach einem der Ansprüche 1 bis 6, wobei der Computer zusätzlich eine Wegplanung für die Erntemaschine (10) und ggf. ein oder mehrere Transportfahrzeuge für das Erntegut im Sinne einer wirtschaftlichen Optimierung durchführt.

8. Verfahren nach Anspruch 7, wobei der Computer Zielvorgaben für mehrere Erntemaschinen (10) berechnet.

9. Verfahren nach einem der Ansprüche 1 bis 8, wobei die äußeren Randbedingungen eine oder mehrere der folgenden sind: Größe eines beim Erntevorgang noch abzuerntenden Feldes, Lage eines beim Erntevorgang abzuerntenden Feldes und der Abgabestelle des Ernteguts, eine Wettervorhersage, Feuchtigkeit und/oder ein Qualitätsparameter des Ernteguts, Kosten einer nachträglichen Trocknung des Ernteguts, verfügbare Transportmöglichkeiten für das Erntegut, Betriebskosten der Transportkette, Betriebsdaten der Erntemaschine (10) und ggf. verfügbarer, weiterer Erntemaschinen, und/oder geplante nachfolgende Nutzung des Felds.

10. Verfahren nach einem der Ansprüche 1 bis 9, wobei vor der Übernahme der Zielvorgabe durch einen Bordcomputer (54) der Erntemaschine (10) eine Bestätigung durch einen Bediener (216) eingebbar ist.

11. Verfahren nach einem der Ansprüche 1 bis 10, wobei der Schritt des Berechnens wiederholt wird, wenn sich während des Erntevorgangs eine der Berechnungsgrundlagen ändert.

12. Verfahren nach Anspruch 11, wobei eingebbar ist, ob und ggf. ab welcher betragsmäßigen Änderung einer Zielvorgabe eine Bestätigung durch den Bediener (216) vorgesehen ist.

13. Anordnung zur Optimierung von einem Arbeitsparameter einer Erntemaschine (10) bei einem durchzuführenden Erntevorgang, mit einem Computer (200), der programmiert ist, eine zur Festlegung des Arbeitsparameters verwendbare Zielvorgabe für die Erntemaschine (10) im Sinne einer wirtschaftlichen Optimierung des Ergebnisses des Erntevorganges unter Berücksichtigung äußerer, den Erntevorgang betreffender Randbedingungen sowie von Betriebskosten der Erntemaschine (10) und von einem erwarteten Verkaufspreis des Ernteguts zu berechnen, **dadurch gekennzeichnet, dass** der Computer (200) programmiert ist, bei der Berechnung der Zielvorgabe die Abhängigkeit des erwarteten Verkaufspreises des Ernteguts von mindestens einem Qualitätsparameter des Ernteguts zu berücksichtigten.
